(19) Europäisches Patentamt / European Patent Office / Office européen des brevets

(11) **EP 2 696 091 B1**

(12) **EUROPEAN PATENT SPECIFICATION**

(45) Date of publication and mention
of the grant of the patent:
**24.09.2014 Bulletin 2014/39**

(51) Int Cl.:
***F16D 48/06*** *(2006.01)*

(21) Application number: **12195031.5**

(22) Date of filing: **30.11.2012**

(54) **Straddle-type vehicle**

Sattelsitz-Fahrzeug

Véhicule de type à selle

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **10.08.2012 JP 2012178443**

(43) Date of publication of application:
**12.02.2014 Bulletin 2014/07**

(73) Proprietor: **Yamaha Hatsudoki Kabushiki Kaisha
Shizuoka-ken Shizuoka 438-8501 (JP)**

(72) Inventor: **Fujita, Takashi
c/o Yamaha Hatsudoki Kabushiki Kaisha
Shizuoka-ken Shizuoka 438-8501 (JP)**

(74) Representative: **Zimmermann, Tankred Klaus et al
Schoppe, Zimmermann
Stöckeler & Zinkler & Partner
Patentanwälte
Postfach 246
82043 Pullach bei München (DE)**

(56) References cited:
**EP-A2- 1 669 625      DE-A1- 4 229 024**

**Description**

TECHNICAL FIELD

The present invention relates to a straddle-type vehicle.

BACKGROUND ART

Straddle-type vehicles equipped with a multi-geared type transmission mechanism, a clutch, and an actuator for driving the clutch and the transmission mechanism are conventionally known. In the straddle-type vehicle, a control device such as ECU outputs a gear shifting command according to the driving condition so that the actuator is driven. Alternatively, the rider allows the gear shifting command to output by operating a shift switch or the like so that the actuator is driven. The actuator performs a series of operations, such as causing the clutch to disengage, subsequently changing the gear position of the transmission mechanism, and thereafter causing the clutch to engage. At the time of engagement of the clutch, the control device executes a control process of gradually engaging the clutch so that large shock does not occur. That is, the control device executes what is called a half-clutch control process.

Japanese Unexamined Patent Application Publication JP 2006-170229 A discloses that in a straddle-type vehicle, different half-clutch control processes are executed when starting the vehicle and during driving. The straddle-type vehicle described in the publication executes the half-clutch control process based on the engine rotational speed when starting, while it executes the half-clutch control process mainly based on the clutch rotational speed difference in the gear shifting during driving. The term "the clutch rotational speed difference" means the rotational speed difference between the drive side portion and the driven side portion of the clutch.

DE 42 29 024 A1 describes an arrangement for controlling a friction clutch. The friction clutch is operated by a servo drive via a processor control which operates the clutch with respect to the engine condition and the vehicle speed etc. The control has two reference engine speeds; one below idling speed and one above. The lower level is used to release the clutch to prevent stalling while the higher level is used as an engine braking control, e.g. when the vehicle is on an inclined surface. The higher speed can be used to provide controlled engine braking if the vehicle rolls against the set gear direction, with the throttle pedal at idling. This allows the driver to move the vehicle in and out of spaces on an inclined surface with a minimum of gear changes.

SUMMARY OF INVENTION

It is an object of the present invention to provide a straddle-type vehicle that can continue the driving half-clutch control process in such a condition that engine stalling actually does not occur so that engine stalling and impairment of the riding feel can be prevented.

This object is achieved by a straddle-type vehicle according to claim 1.

Normally, the clutch is more quickly engaged in the half-clutch control process at the time of gear shifting during driving (hereinafter referred to as the "driving half-clutch control process") than in the half-clutch control process at the time of starting (hereinafter referred to as the "starting half-clutch control process"). However, if the clutch is engaged quickly during low-speed driving, engine stalling may be caused. For this reason, the straddle-type vehicle of the above-mentioned publication employs the following procedure. If the vehicle speed becomes equal to or less than a predetermined vehicle speed in the middle of the upshifting control process during driving, the driving half-clutch control process is stopped, then the clutch is disengaged again, and thereafter the starting half-clutch control process is executed.

However, when the driving half-clutch control process is stopped and then the starting half-clutch control process is executed, the gear shifting time becomes longer, and quick gear shifting as demanded during driving becomes difficult, which may be a cause of impairment of the riding feel. For this reason, it is desirable to perform the stopping of the driving half-clutch control process and then executing the starting half-clutch control process as rarely as possible. The present inventor has found as a result of assiduous studies that, with the control process of immediately stopping the driving half-clutch control process if the vehicle speed becomes equal to or less than a predetermined vehicle speed, there are cases that the driving half-clutch control process is stopped even through the vehicle is in such a condition that engine stalling actually does not occur.

The present invention provides a straddle-type vehicle comprising: an engine; a driving wheel driven by mechanical power of the engine; a multi-geared type transmission mechanism having a dog clutch and disposed between the engine and the driving wheel; a clutch provided between the engine and the transmission mechanism; a shift actuator for driving the transmission mechanism; a clutch actuator for driving the clutch; a rotating shaft provided between the clutch and the driving wheel; a first detecting device for detecting a rotational speed of the rotating shaft; a second detecting device for detecting a rotational speed of the engine; and a control device for controlling the clutch actuator and the shift actuator so as to cause disengagement of the clutch, changing of a gear position of the transmission mechanism, and engagement of the clutch in gear shifting. The control device comprises: a clutch control unit for controlling the clutch actuator so as to cause the clutch having been disengaged to engage at the time of gear shifting during driving; a determining unit for determining whether or not the following first condition or the following second condition is satisfied during the controlling of the clutch control unit; and an engine stall prevention control unit for stopping the controlling of the clutch control unit and controlling the clutch actuator so as to cause the clutch to disengage if the determining unit determines that the following first condition or the second condition is satisfied.

The first condition is either one or both of the following conditions: that a moving average of the rotational speed of the rotating shaft is equal to or less than a first threshold value, and that the rotational speed of the rotating shaft has continued to be equal to or less than the first threshold value for a predetermined time or longer since the rotational speed of the rotating shaft was detected to be equal to or less than the first threshold value.

The second condition is at least that the engine rotational speed is equal to or less than a second threshold value.

The present inventor has found as a result of assiduous studies that in the multi-geared type transmission mechanism having a dog clutch, transient vibration (hereinafter also referred to as "gear lash") occurs during the time from when the gear position is changed to when the dog clutch is engaged, and because of the vibration, the rotational speed of the rotating shaft provided between the clutch and the driving wheel temporarily becomes equal to or less than the threshold value. According to the present invention, setting the first condition in this way has the following advantages: even if the rotational speed of the rotating shaft temporarily becomes equal to or less than the first threshold value because of the gear lash, the control process of the clutch control unit will not be stopped for that reason alone. As a result, it is possible to avoid the situation in which the control process is stopped even though the vehicle is in such a condition that engine stalling actually does not occur. Accordingly, impairment of the riding feel can be prevented. Moreover, by setting the second condition, the control process is stopped if the engine rotational speed becomes equal to or less than the second threshold value, so engine stalling can be prevented more reliably. If the moving average of the rotational speed of the rotating shaft becomes equal to or less than the first threshold value, or if the rotational speed of the rotating shaft has continued to be equal to or less than the first threshold value for a predetermined time or longer since the rotational speed of the rotating shaft was detected to be equal to or less than the first threshold value, the above-described control process of the clutch control unit is stopped. Therefore, the control process can be stopped before the engine rotational speed reduces to a value equal to or less than the second threshold value. Thus, by combining the first condition and the second condition with each other, engine stalling can be prevented and moreover the time required for stopping of the control process can be shortened.

In another embodiment of the invention, the second condition is that the engine rotational speed is equal to or less than the second threshold value and the rotational speed of the rotating shaft is equal to or less than the third threshold value.

This allows the control device to determine whether or not to stop the control process of the clutch control unit from the engine rotational speed and the rotational speed of the rotating shaft. Therefore, engine stalling can be prevented more reliably.

In another embodiment of the invention, the third threshold value and the first threshold value are equal to each other.

The first threshold value and the third threshold value are typically stored within the control device. By setting the first threshold value and the third threshold value to be the same threshold value as described above, the number of the threshold values stored in the control device can be reduced.

In another embodiment of the invention, the engine includes: a crankshaft; a main shaft coupled to the crankshaft via the clutch; a drive shaft coupled to the main shaft via the transmission mechanism; and a middle shaft coupled to the drive shaft via a gear. The rotating shaft is the middle shaft.

The middle shaft tends to be affected easily by the gear lash. When the middle shaft is the rotating shaft and the control device detects the rotational speed of the middle shaft, the gear lash can be detected more suitably. As a result, it is possible to more suitably avoid the situation in which the control process is stopped even though the vehicle is in such a condition that engine stalling actually does not occur.

In another embodiment of the invention, the engine is controlled so that the rotational speed thereof at a standstill becomes a predetermined idle rotation speed. The first threshold value is respectively set for each of the gear positions of the transmission mechanism. The first threshold value for each of the gear positions is set to a rotational speed of the middle shaft at the time when the engine rotates at the idle rotation speed at each of the gear positions.

This makes it possible to set the first threshold value as appropriate according to each respective gear position. Moreover, by setting the first threshold value to be the idle rotation speed, engine stalling can be prevented more reliably.

ADVANTAGEOUS EFFECTS OF INVENTION

The present invention makes it possible to provide a straddle-type vehicle that can continue the driving half-clutch control process in such a condition that engine stalling actually does not occur, so that engine stalling and impairment of the riding feel can be prevented.

BRIEF DESCRIPTION OF DRAWINGS

Fig. 1 is a side view illustrating a motorcycle according to one embodiment.

Fig. 2 is a cross-sectional view illustrating an internal structure of a power unit according to the embodiment.

Fig. 3 is a view illustrating the relationship between a crankshaft, a main shaft, a drive shaft, and a middle shaft of the power unit.

Fig. 4 is a block diagram illustrating main elements of the motorcycle according to the embodiment.

Fig. 5 is a flow chart illustrating the control process of an automatic transmission apparatus according to the embodiment.

Fig. 6 is a chart illustrating changes over time of the clutch position, the shift drum rotational position, and the middle shaft rotational speed in a control process for stopping a driving half-clutch control process of the automatic transmission apparatus according to the embodiment.

Fig. 7 is a chart illustrating changes over time of the clutch position, the shift drum rotational position, and the middle shaft rotational speed in a control process for continuing a driving half-clutch control process of the automatic transmission apparatus according to the embodiment.

DESCRIPTION OF EMBODIMENTS

Hereinbelow, preferred embodiments of the present invention will be described. It should be noted that the other matters not specifically mentioned in this description but necessary to implement the invention can be understood as design variations by a skilled person based on the prior art in the technical field. The present invention may be implemented based on the content disclosed herein and the common technical knowledge in the field.

< EMBODIMENT >

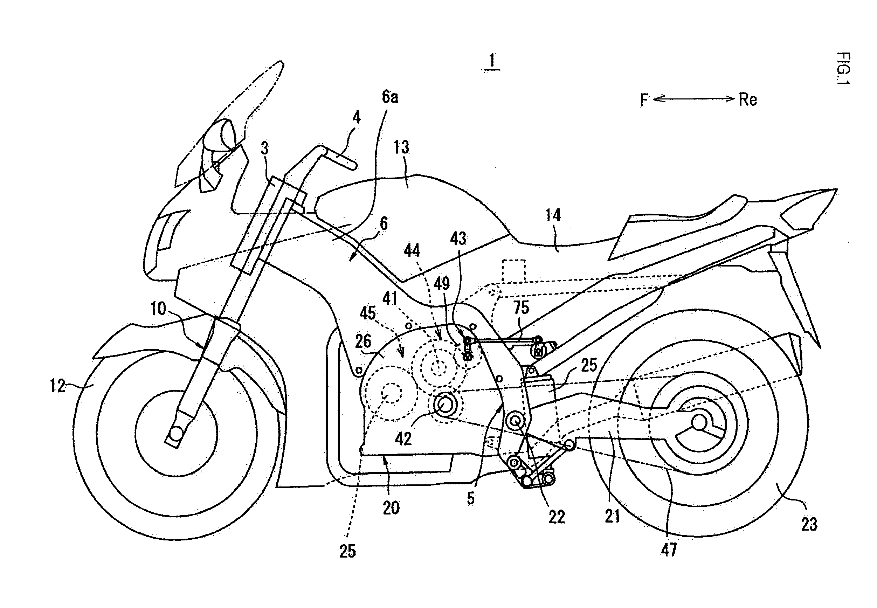

Hereinbelow, a motorcycle equipped with an automatic transmission apparatus according to the present invention will be described with reference to the drawings. Fig. 1 is a side view illustrating a motorcycle 1. In the present description, the terms "front," "rear," "left," and "right" respectively refer to front, rear, left, and right as defined based on the perspective of the rider seated on a later-described seat 14. Reference characters F and Re in the drawings indicate front and rear, respectively.

The motorcycle 1 is one example of the straddle-type vehicle according to the present embodiment. The motorcycle 1 is what is called an on-road type motorcycle. For example, the straddle-type vehicle according to the present invention may be any type of motorcycle including an off-road type motorcycle, a sport bike type motorcycle, a scooter type motorcycle, and a moped type motorcycle. The straddle-type vehicle according to the present invention is not limited to the motorcycle 1. For example, the straddle-type vehicle according to the present invention may be an ATV, a four-wheeled all-terrain vehicle, a snowmobile, and the like.

As illustrated in Fig. 1, the motorcycle 1 has a head pipe 3 and a body frame 6. The body frame 6 has a pair of left and right frame unit 6a extending rearward the head pipe 3. In Fig. 1, only of the frame portions, the frame portion 6a, is depicted. A rear portion of the frame portion 6a extends downward. A rear-arm bracket 5 is connected to a rear portion of the frame portion 6a. A front end portion of a rear arm 21 is connected to the rear-arm bracket 5 via a pivot shaft 22. The rear arm 21 is supported vertically swingably by the pivot shaft 22. A rear wheel 23 is supported at a rear end portion of the rear arm 21.

A fuel tank 13 is disposed above the frame portion 6a. A seat 14 for the rider to be seated is disposed at the rear of the fuel tank 13.

A front fork 10 is supported rotatably by the head pipe 3. A handle bar 4 is provided at the upper end of the front fork 10. A front wheel 12 is provided rotatably at a lower end of the front fork 10.

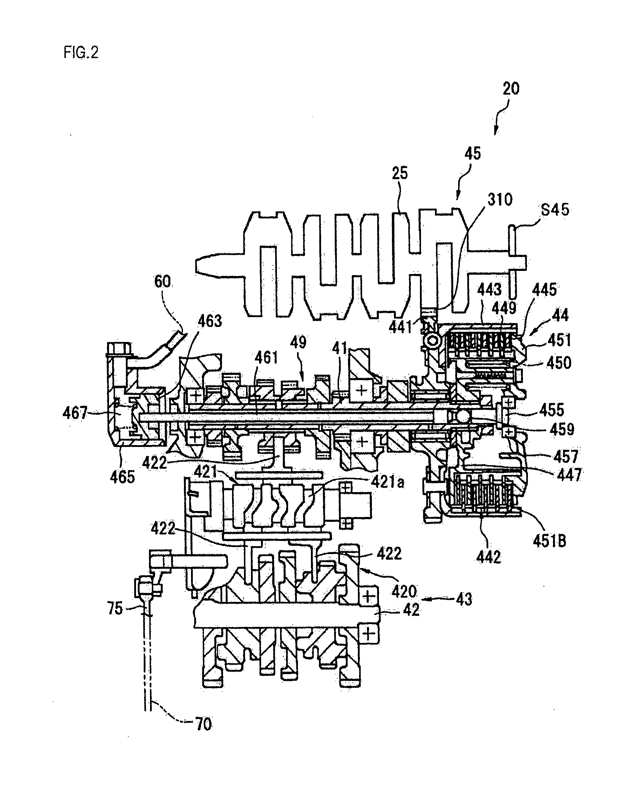

A power unit 20 is mounted on the frame portion 6a and the rear-arm bracket 5 in a suspended manner. Fig. 2 is a cross-sectional view illustrating an internal structure of the power unit 20. As illustrated in Fig. 2, the power unit 20 at least includes an engine 45, a clutch 44, and a transmission mechanism 43. The engine 45, the clutch 44, and the transmission mechanism 43 are assembled integrally to a crankcase 26 (see Fig. 1).

The engine 45 according to the present embodiment is an internal combustion engine that uses gasoline as the fuel. However, the engine 45 may also be one in which a gasoline engine and an electric motor are combined. The engine 45 has a crankshaft 25.

The crankshaft 25 outputs the torque of the engine 45. The power unit 20 has a main shaft 41, a drive shaft 42, and a middle shaft 46. The crankshaft 25 is coupled to a main shaft 41 via the clutch 44. The main shaft 41 is arranged parallel to the crankshaft 25. The main shaft 41 is also arranged parallel to a drive shaft 42. The main shaft 41 and the drive shaft 42 are arranged between the clutch 44 and the rear wheel 23.

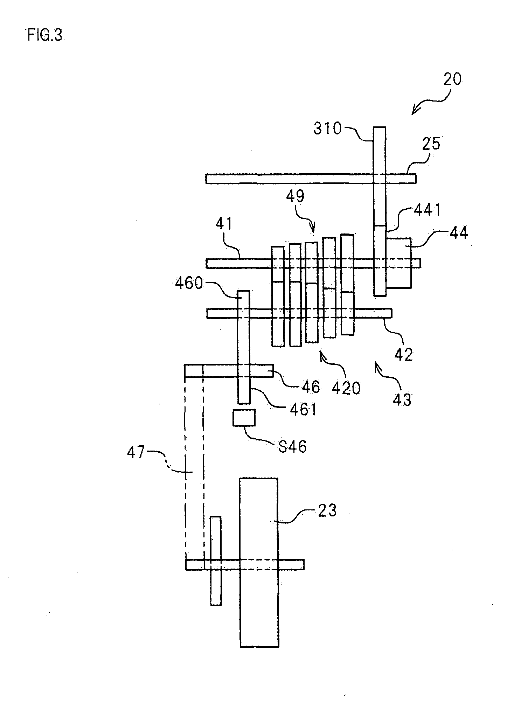

Fig. 3 is a view illustrating the relationship between the crankshaft 25, the main shaft 41, the drive shaft 42, and the middle shaft 46 of the power unit 20. As illustrated in Fig. 3, the middle shaft 46 is provided between the clutch 44 and the rear wheel 23. Specifically, the middle shaft 46 is provided between the drive shaft 42 and a power transmission mechanism 47 such as a chain. A gear 460 of the drive shaft 42 and a gear 461 of the middle shaft 46 are engaged with each other, whereby the middle shaft 46 is connected to the drive shaft 42. The middle shaft 46 is connected to the rear wheel 23 via the power transmission mechanism 47. The middle shaft 46 is a shaft to which the transient vibration is transmitted more until the dog clutch is engaged, when the gear position of the later-described dog clutch type transmission mechanism 43 is changed. In the present embodiment, the rotating shaft is the middle shaft 46.

As illustrated in Fig. 2, the clutch 44 according to the present embodiment is a multiple friction plate clutch. The clutch 44 has a clutch housing 443 and a clutch boss 447. A plurality of friction plates 445 are provided in the clutch housing 443. A plurality of clutch plates 449 are provided outside the clutch boss 447. Each of the friction plates 445 rotates together with the clutch housing 443. On the other hand, each of the friction plates 445 is displaceable with respect to the axial direction of the main shaft 41. The friction plates 445 are arrayed along the axial direction of the main shaft 41. The friction plate 445 constitutes the "drive side rotator" in the clutch 44.

Each of the clutch plates 449 faces an adjacent one of the friction plates 445. Each of the clutch plates 449 rotates together with the clutch boss 447. Each of the clutch plates 449 is displaceable with respect to the axial direction of the main shaft 41. The clutch plate 449 constitutes the "driven side rotator" in the clutch 44. In the present embodiment, the plurality of friction plates 445 and the plurality of clutch plates 449 make up a plate assembly 442.

As illustrated in Fig. 2, a pressure plate 451 is disposed vehicle-widthwise outward of the main shaft 41 (i.e., on the right in Fig. 2). The pressure plate 451 is formed in a substantially disc shape. A pressing part 451B projecting toward the plate assembly 442 side is formed in a radially outward portion of the pressure plate 451. The pressing part 451B faces the friction plate 445 that is located on the rightmost side of the plate assembly 442.

The clutch 44 is provided with a spring 450. The spring 450 urges the pressure plate 451 vehicle-widthwise inwardly (i.e., leftward in Fig. 2). In other words, the spring 450 urges the pressure plate 451 in a direction in which the pressing part 451B presses the plate assembly 442.

A center portion of the pressure plate 451 is engaged with one end portion (the right end portion in Fig. 2) of a push rod 455 via a bearing 457. This allows the pressure plate 451 to be rotatable relative to the push rod 455. Note that the main shaft 41 has a tubular shape. The other end portion (the left end portion) of the push rod 455 is accommodated inside the main shaft 41. Inside the main shaft 41, a spherical ball 459 is provided adjacent to the other end portion (the left end portion) of the push rod 455. Further inside the main shaft 41, a push rod 461 is provided adjacently to the ball 459.

A left end portion of the push rod 461 protrudes from the main shaft 41. A piston 463 is provided integrally with the left end portion of the push rod 461. The piston 463 is guided by the cylinder main body 465, and it is slidable in the axial directions of the main shaft 41.

The clutch 44 is driven by a clutch actuator 60. In the present embodiment, the clutch actuator 60 is an electric motor, but the clutch actuator 60 is not limited to the electric motor. The clutch actuator 60 drives the clutch 44 so that the clutch 44 can be engaged and disengaged. When the clutch actuator 60 is actuated, lubrication oil is supplied into a space 467 surrounded by the piston 463 and the cylinder main body 465. When lubrication oil is supplied into the space 467, the piston 463 is pushed and shifted rightward in Fig. 2. Thereby, the piston 463 pushes the pressure plate 451 rightward in Fig. 2, via the push rod 461, the ball 459, the push rod 455, and the bearing 457. When the pressure plate 451 is pushed rightward in Fig. 2, the pressing part 451B of the pressure plate 451 is separated from the friction plates 445, and the clutch 44 is brought into a disengaged state.

At the time when the clutch 44 is engaged, the pressure plate 451 is moved leftward in Fig. 2 by the spring 450. When the pressure plate 451 moves leftward in Fig. 2, the pressing part 451B presses the plate assembly 442 leftward. As a result, the friction plates 445 and the clutch plates 449 in the plate assembly 442 are brought into pressure contact with each other. Thereby, the clutch 44 is brought into an engaged state.

On the other hand, in the disengaged state of the clutch 44, the pressure plate 451 is moved rightward in Fig. 2 by the push rod 451. Then, the pressing part 451B of the pressure plate 451 is separated from the plate assembly 442. In the state in which the pressing part 451B is separated from the plate assembly 442, the friction plates 445 and the clutch plates 449 are not in pressure contact with each other. A slight clearance is formed between each of the friction plates 445 and each of the clutch plates 449. Therefore, a friction force that can transmit a drive force does not occur between the friction plates 445 and the clutch plates 449.

Thus, the pressure plate 451 moves in one of the axial directions of the main shaft 41 or in the other direction according to the magnitude relationship between the drive force of the clutch actuator 60 and the urging force of the spring 450. According to the just-described movement, the clutch 44 is brought into an engaged state or a disengaged state.

A gear 310 is supported integrally on the crankshaft 25 of the engine 45. A gear 441 that meshes with the gear 310 is supported on the main shaft 41. The gear 441 is rotatable relative to the main shaft 41. The gear 441 is provided integrally with, for example, the clutch housing 443. As a result, the torque of the engine 45 is transmitted from the crankshaft 25 via the gear 441 to the clutch housing 443. Also, the torque of the engine 45 is transmitted the clutch housing 443 to the clutch boss 447 by the friction force produced between the plurality of friction plates 445 and the plurality of clutch plates 449. The clutch boss 447 and the main shaft 41 rotate integrally with each other. This means that there is no relative rotation between the clutch boss 447 and the main shaft 41. Therefore, when the clutch 44 is engaged, the torque of the engine 45 is transmitted to the main shaft 41.

The push rod 455 is not limited to such a push rod that pushes the pressure plate 451 rightward in Fig. 2 by a mechanism inserted in the main shaft 41. The push rod 455 may be such a push rod that pulls the pressure plate 451 rightward in Fig. 2 by a mechanism provided vehicle-widthwise outward (i.e., rightward in Fig. 2) of the pressure plate 451.

The clutch 44 may not be a multiple plate clutch but may be a single plate clutch. The clutch 44 may also be provided with a centrifugal weight. In this case, the clutch 44 is engaged and disengaged by actuation of the clutch actuator 60 and the centrifugal force of the centrifugal weight.

Next, the configuration of the transmission mechanism 43 will be described in detail. The transmission mechanism 43 according to the present embodiment is what is called a dog clutch type transmission mechanism, and a multi-speed type transmission mechanism. The transmission mechanism 43 is provided between the engine 45 and the rear wheel 23. More specifically, the transmission mechanism 43 is disposed on a power transmission path for transmitting the mechanical power of the engine 45 to the rear wheel 23 (see Fig. 1). The transmission mechanism 43 is disposed between the friction plates 445 of the clutch 44 and the rear wheel 23. The transmission mechanism 43 has later-described transmission gears 49 and 420, a shift drum 421, a shift fork 422, a shift actuator 70, the main shaft 41, the drive shaft 42, the middle shaft 46, and so forth.

A plurality of transmission gears 49 are attached to the main shaft 41. On the other hand, a plurality of transmission gears 420 that correspond to the above-mentioned plurality of transmission gears 49 are attached to the drive shaft 42. Each of the transmission gears 49 and each of the transmission gears 420 have an engaging portion comprising a protrusion protruding in an axial direction of the main shaft 41 or a recess recessed in an axial direction of the main shaft 41. Of the plurality of transmission gears 49 and the plurality of transmission gears 420, only selected one or more of the transmission gears 49 and 420 are engaged with each other. The engaging portions of the transmission gears 49 and the transmission gears 420 overlap with each other with respect to the axial direction of the main shaft 41, whereby the transmission gears 49 and the transmission gears 420 are engaged with each other. At least one of the transmission gears 49 other than the selected one of the transmission gears 49 and the transmission gears 420 other than the selected one of the transmission gears 420 is allowed to be rotatable relative to the main shaft 41 or the drive shaft 42. In other words, at least one of the non-selected transmission gears 49 and the non-selected transmission gears 420 is allowed to spin freely relative to the main shaft 41 or the drive shaft 42. The transmission of rotation between the main shaft 41 and the drive shaft 42 is carried out only through the selected transmission gear 49 and the selected transmission gear 420 that mesh with each other.

The selection of the transmission gear 49 and the transmission gear 420 is performed by the shift drum 421. According to the rotation of the shift drum 421, the combination of the transmission gears 49 and 420 that engage with each other is changed. A plurality of cam grooves 421a are formed in the outer circumferential surface of the shift drum 421. A shift fork 422 is fitted to each of the cam grooves 421a. Each shift fork 422 engages with a predetermined transmission gear 49 of the main shaft 41 and a predetermined transmission gear 420 of the drive shaft 42. In response to rotation of the shift drum 421, each of the plurality of the shift forks 422 is guided by the cam grooves 421a to moves in an axial direction of the main shaft 41. Thereby, of the transmission gears 49 and 420, the gears to be engaged with each other are selected. More specifically, of the plurality of transmission gears 49 and the plurality of transmission gears 420, only the pair of gears that is located at the position corresponding to the rotation angle of the shift drum 421 is brought into a fixed state relative to the main shaft 41 and the drive shaft 42 by a spline. Thereby, the gear position in the transmission mechanism 43 is determined. As a result, the transmission of rotation is carried out between the main shaft 41 and the drive shaft 42 through the transmission gear 49 and the transmission gear 420 at a predetermined transmission gear ratio. The shift drum 421 is rotated only by a predetermined angle by a shift rod 75 moving back and forth.

Switching of the transmission gears of the transmission mechanism 43, in other words, change of the gear position of the transmission mechanism 43, is performed by the shift actuator 70. In the present embodiment, the shift actuator 70 is an electric motor. However, the shift actuator 70 is not limited to the electric motor. In the present embodiment, the shift actuator 70 is connected to the shift drum 421 via the shift rod 75. However, the shift actuator 70 may be connected directly to the shift drum 421. The shift actuator 70 changes the combination of the transmission gears 49 and 420 that engage with each other by rotating the shift drum 421. The shift rod 75 is driven by the shift actuator 70 to thereby move back and forth.

With such a configuration as described above, when the engine 45 is operated under the condition in which a predetermined pair of transmission gear 49 and transmission gear 420 are fixed respectively to the main shaft 41 and the drive shaft 42 and the clutch 44 is brought into an engaged state, the torque of the engine 45 is transmitted to the main shaft 41 via the clutch 44. Also, the transmission of rotation is carried out at a predetermined transmission gear ratio between the main shaft 41 and the drive shaft 42 via the predetermined pair of transmission gear 49 and transmission gear 420, so that the drive shaft 42 is rotated. In association with rotation of the drive shaft 42, the middle shaft 46 rotates. When the middle shaft 46 is rotated, the torque is transmitted by the power transmission mechanism 47 that connects the middle shaft 46 to the rear wheel 23, so that the rear wheel 23 is rotated.

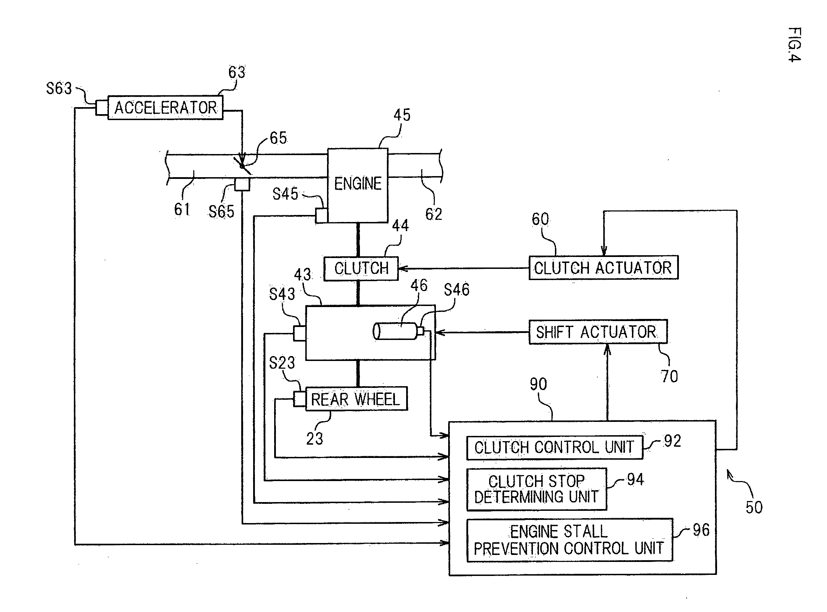

Fig. 4 is a block diagram showing main elements of the motorcycle 1. The motorcycle 1 has the engine 45, the clutch 44, and the transmission mechanism 43. The motorcycle 1 also has an ECU (Electric Control Unit) 90 as a control device. The ECU 90 controls the engine and so forth. An intake pipe 61 and an exhaust pipe 62 are connected to the engine 45. A throttle valve 65 is disposed in the intake pipe 61. The throttle valve 65 adjusts the amount and speed of the air flowing through the intake pipe 61. An accelerator 63 is connected to the throttle valve 65. The opening of the throttle valve 65 can be varied by the rider's operating the accelerator 63.

Next, an automatic transmission apparatus 50 according to the present embodiment will be described below. As illustrated in Fig. 4, the automatic transmission apparatus 50 has the clutch 44, the transmission mechanism 43, the shift actuator 70, and the clutch actuator 60. The automatic transmission apparatus 50 also has an ECU (Electric Control Unit) 90. In the present invention, the ECU 90 constitutes the control device. The ECU 90, for example, performs the controlling of the clutch actuator 60 and the shift actuator 70 so as to cause disengagement of the clutch 44, changing of the gear position of the transmission mechanism 43, and engagement of the clutch 44 in gear shifting.

The automatic transmission apparatus 50 has a middle shaft rotational speed sensor S46, an engine rotational speed sensor S45, a gear shift position sensor S43, a throttle opening sensor S65, an accelerator opening sensor S63, and a vehicle speed sensor S23. The middle shaft rotational speed sensor S46 is provided for the middle shaft 46 of the transmission mechanism 43 to detect the rotational speed of the middle shaft 46. The engine rotational speed sensor S45 detects the rotational speed of the engine 45 (more specifically, the rotational speed of the crankshaft 25 of the engine 45). The gear shift position sensor S43 detects the gear shift position of the transmission mechanism 43. The throttle opening sensor S65 detects the opening of the throttle valve 65. The accelerator opening sensor S63 detects the operation amount of the accelerator 63. The vehicle speed sensor S23 detects the vehicle speed of the motorcycle 1. In the present embodiment, the vehicle speed sensor S23 is configured to detect the rotational speed of the rear wheel 23. The vehicle speed is detected based on the rotational speed of the rear wheel 23. However, the method of detecting the vehicle speed is not particularly limited.

The middle shaft rotational speed sensor S46, the engine rotational speed sensor S45, the gear shift position sensor S43, the throttle opening sensor S65, the accelerator opening sensor S63, and the vehicle speed sensor S23 are each connected to the ECU 90. The ECU 90 receives signals from the middle shaft rotational speed sensor S46, the engine rotational speed sensor S45, the gear shift position sensor S43, the throttle opening sensor S65, the accelerator opening sensor S63, and the vehicle speed sensor S23. The ECU 90 is connected to the clutch actuator 60 and the shift actuator 70. The ECU 90 outputs a control signal to the clutch actuator 60 and the shift actuator 70.

As illustrated in Fig. 4, the ECU 90 has a clutch control unit 92 for controlling the clutch actuator 60 so as to cause the clutch 44 having been disengaged to engage, a clutch stop determining unit 94 for stopping engagement of the clutch 44 during the controlling of the clutch control unit 92, and an the engine stall prevention control unit 96 for stopping the controlling of the clutch control unit 92 and controlling the clutch actuator 60 so as to cause the clutch 44 to disengage.

The automatic transmission apparatus 50 performs a series of the following operations: causing the clutch 44 to disengage, changing the gear position of the transmission mechanism 43, and causing the clutch 44 to engage. At the time of engagement of the clutch 44, the automatic transmission apparatus 50 executes what is called a half-clutch control process of gradually engaging the clutch 44 so that large shock does not occur. For this half-clutch control process, different half-clutch control processes are executed at the time of starting and at the time of gear shifting during driving. The half-clutch control process at the time of starting (i.e., the starting half-clutch control process) is performed based on the rotational speed of the engine 45. The half-clutch control process at the time of gear shifting during driving (i.e., the driving half-clutch control process) is performed mainly based on the rotational speed difference between the rotational speed of the friction plates 445 of the clutch 44 and the rotational speed of the clutch plates 449 of the clutch 44. The clutch 44 is engaged more quickly in the driving half-clutch control process than in the starting half-clutch control process. However, if the clutch 44 is engaged quickly during low-speed driving, engine stalling may be caused. In view of that, it appears possible to stop the driving half-clutch control process if the vehicle speed becomes equal to or less than a predetermined vehicle speed in the driving half-clutch control process, as in the invention of the previously-mentioned publication. In that case, however, the driving half-clutch control process is stopped in some cases even though the vehicle is in such a situation that engine stalling actually does not occur. In view of that, the automatic transmission apparatus 50 according to the present embodiment executes a control process as described below.

The half-clutch control process according to the present embodiment is not limited to the driving half-clutch control process and the starting half-clutch control process as the above-described control processes. Any kind of controlling of the driving half-clutch control process and the starting half-clutch control process may be employed as long as the clutch 44 is engaged more quickly in the driving half-clutch control process than in the starting half-clutch control process. For example, both the driving half-clutch control process and the starting half-clutch control process may control the clutch actuator 60 based on, for example, the vehicle speed detected by the vehicle speed sensor S23, the opening of the throttle valve 65 detected by the throttle opening sensor S65, the degree of opening of the accelerator 63 detected by the accelerator opening sensor S63, and the rotational speed of the engine 45 detected by the engine rotational speed sensor S45. In this case as well, engine stalling may be caused if the clutch 44 is engaged quickly during low-speed driving. In such a half-clutch control process as well, the clutch 44 is engaged more quickly in the driving half-clutch control process than in the starting half-clutch control process.

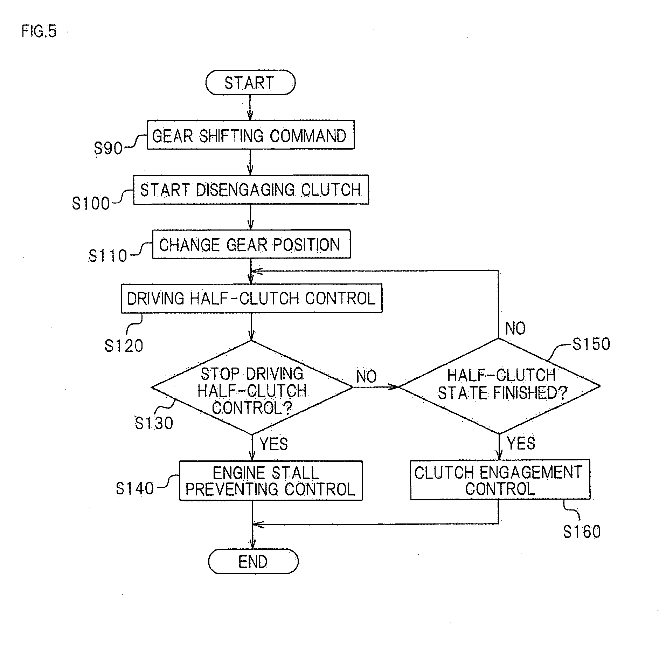

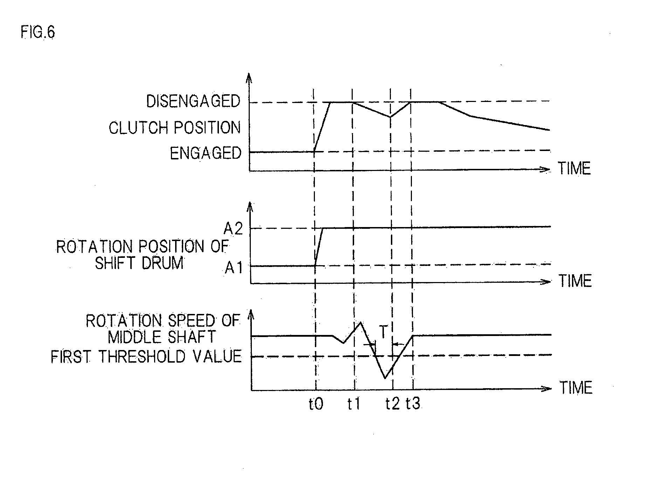

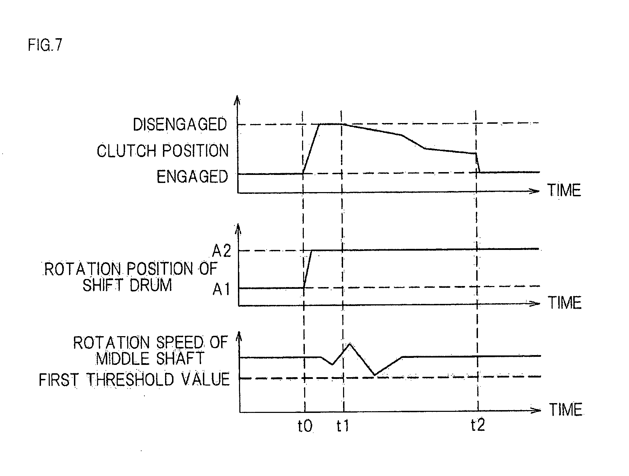

Next, the automatic transmission apparatus 50 according to the present embodiment will be described with reference to Figs. 5 through 7. Fig. 5 is a flow chart illustrating the control process of the automatic transmission apparatus 50 according to the present embodiment. Fig. 6 is a chart illustrating changes over time of the clutch position, the shift drum rotational position, and the middle shaft rotational speed at the time when the driving half-clutch control process is stopped in a driving half-clutch control process of the automatic transmission apparatus 50 according to the embodiment. Fig. 7 is a chart illustrating changes over time of the clutch position, the shift drum rotational position, and the middle shaft rotational speed at the time when the driving half-clutch control process is continued in a driving half-clutch control process of the automatic transmission apparatus 50 according to the embodiment.

As illustrated in Fig. 5, first, at step S90, the rider presses the shift-up switch or the shift-down switch, which are not shown in the drawings, during driving and thereby the ECU 90 receives a gear shifting command. Referring to Figs. 6 and 7, the ECU 90 receives the gear shifting command at time t0.

Next, at step S100 shown in Fig. 5, the ECU 90 starts disengagement of the clutch 44 by driving the clutch actuator 60. Referring to Figs. 6 and 7, the ECU 90 starts to disengage the clutch 44 at the same time as receiving the gear shifting command at time t0. Then, at step S110 in Fig. 5, the ECU 90 drives the shift actuator 70 so as to start changing the gear position of the transmission mechanism 43. The ECU 90 causes the shift drum 421 to rotate by applying a voltage to the shift actuator 70, to change the gear position of the transmission mechanism 43. Referring to Figs. 6 and 7, the ECU 90 actuates the shift actuator 70 at the same time as starting disengagement of the clutch 44 at time t0. When driving the shift actuator 70, the rotational position of the shift drum 421 moves from position A1 to position A2. Note that the start of the changing of the gear position may be after completing disengagement of the clutch 44. The start of the changing of the gear position may be in the middle of disengagement of the clutch 44.

Then, at step S120 in Fig. 5, which is after completing the changing of the gear position, the ECU 90 executes the driving half-clutch control process. The ECU 90 causes the clutch 44 having been in a disengagement state to enter a half clutch state by controlling the clutch actuator 60. Referring to Figs. 6 and 7, at time t1, the changing of the gear position is completed, and the clutch 44 having been in a disengagement state is caused to enter the half clutch state. More specifically, the ECU 90 executes the driving half-clutch control process. It should be noted that the half clutch state refers to a state in which the friction plates 445 and the clutch plates 449 are rotating together while slipping each other. In other words, the half-clutch control process refers to a state in which the friction plates 445 and the clutch plates 449 are in relative rotation to each other while making contact with each other. Before and after the half clutch state of the clutch 44, transient vibration, i.e., gear lash occurs during the time until the dog clutch comes into engagement when the gear position is changed. This causes the rotational speed of the middle shaft 46 to change temporarily.

Next, at step S 130, the ECU 90 executes a process for determining whether or not the driving half-clutch control process is to be stopped. If the clutch stop determining unit 94 of the ECU 90 determines that the later-described first or second condition is satisfied, it subsequently stops the driving half-clutch control process. Referring to Fig. 6, the ECU 90 executes the determination process for determining whether or not the driving half-clutch control process is to be stopped by the clutch stop determining unit 94 from when the changing of the gear position at time t1 finishes and the ECU 90 starts the driving half-clutch control process.

The conditions for determining whether or not the driving half-clutch control process is to be stopped include a first condition and a second condition. The first condition is a condition based on the rotational speed of the middle shaft 46 (hereinafter also referred to as the "middle shaft rotational speed") and the moving average of the rotational speed of the middle shaft 46. The second condition is a condition based on the rotational speed of the engine 45.

For the first condition, the ECU 90 detects the rotational speed of the middle shaft 46 using the middle shaft rotational speed sensor S46. Then, the ECU 90 calculates the moving average of the rotational speed of the middle shaft 46 from the start of engagement of the clutch 44 (hereinafter also referred to as the "middle shaft speed average"). The moving average of the rotational speed of the middle shaft 46 refers to the average of the rotational speed values of the middle shaft 46 that are detected most recently by the ECU 90 for an arbitrary time n. For example, when the rotational speed of the middle shaft 46 is detected 10 times for time n, the average speed of the rotational speed values of the middle shaft 46 obtained for the 10 times of the detection is employed as the moving average of the rotational speed of the middle shaft 46. The length of time n may be, but not particularly limited to, 100 msec., for example. However, the moving average may not be the one for the most recent arbitrary time n, but may be the average of the rotational speed values of the middle shaft 46 obtained most recently for an arbitrary number m of times. The number m of times here is preferably two or more times.

The ECU 90 stores in advance a first threshold value of the middle shaft speed average, for determining whether or not the driving half-clutch control process is to be stopped when the clutch 44 is in the half clutch state. This first threshold value is stored in a memory or the like, which is not shown in the drawings, within the ECU 90. Then, the ECU 90 compares the middle shaft speed average with the first threshold value to thereby determine whether or not the driving half-clutch control process for the clutch 44 is to be stopped. In the present embodiment, this determination process is referred to as "condition 1-1 based determination". The condition that satisfies the condition 1-1 based determination is represented by the following expression:

$$\text{Middle shaft speed average} \leq \text{First threshold value}$$

If the middle shaft speed average is equal to or less than the first threshold value, the ECU 90 determines that the driving half-clutch control process for the clutch 44 should be stopped.

The condition for determining whether or not the driving half-clutch control process is to be stopped on the first condition may be the condition as follows. As described above, the ECU 90 detects the rotational speed of the middle shaft 46 using the middle shaft rotational speed sensor S46. The ECU 90 stores in advance a predetermined time for the continuous time duration for which the middle shaft rotational speed has been equal to or less than the first threshold value. This predetermined time is stored in a memory or the like, which is not shown in the drawings, within the ECU 90. If the middle shaft rotational speed becomes equal to or less than the first threshold value, the ECU 90 detects for how long the middle shaft rotational speed has continued to be equal to or less than the first threshold value (the detected time duration is hereinafter referred to as the "middle shaft continuous time"). Then, the ECU 90 compares the middle shaft continuous time with the predetermined time. In the present embodiment, this determination process is referred to as "condition 1-2 based determination". The condition that satisfies the condition 1-2 based determination is represented by the following expression:

$$\text{Middle shaft continuous time} \geq \text{Predetermined time.}$$

If the middle shaft continuous time is determined to be equal to or longer than the predetermined time, the ECU 90 determines that the driving half-clutch control process for the clutch 44 should be stopped. On the other hand, if the middle shaft continuous time is determined to be less than the predetermined time, the ECU 90 continues the driving half-clutch control process for the clutch 44. In Fig. 6, time T is the predetermined time, and the middle shaft rotational speed is equal to or less than the first threshold value during the time T. Then, at time t2, the ECU 90 determines that the driving half-clutch control process should be stopped.

It is also possible to determine that the driving half-clutch control process for the clutch 44 should be stopped when either one of the condition 1-1 based determination or the condition 1-2 based determination on the first condition is satisfied. It is also possible to determine that the driving half-clutch control process for the clutch 44 should be stopped when both of the condition 1-1 based determination and the condition 1-2 based determination on the first condition are satisfied. In the case that it is sufficient that either one of the condition 1-1 based determination or the condition 1-2 based determination on the first condition is satisfied, the ECU 90 determines that the driving half-clutch control process for the clutch 44 should be stopped when either one of the conditions for the condition 1-1 based determination and the condition 1-2 based determination is satisfied, and subsequently, the process proceeds to step S140. On the other hand, when neither the condition 1-1 based determination nor the condition 1-2 based determination is satisfied, the ECU 90 determines that the driving half-clutch control process for the clutch 44 should be continued, and subsequently, the process proceeds to step S150.

For the second condition, the ECU 90 detects the rotational speed of the engine 45 using the engine rotational speed sensor S45. The ECU 90 stores in advance a second threshold value of the engine rotational speed, for determining whether or not the driving half-clutch control process is to be stopped when the clutch 44 is in the half clutch state. Like the first threshold value, this second threshold value is stored in a memory or the like, which is not shown in the drawings, within the ECU 90. Then, the ECU 90 compares the engine rotational speed with the second threshold value to thereby determine whether or not the driving half-clutch control process for the clutch 44 is to be stopped. In the present embodiment, this determination process is referred to as "condition 2-1 based determination". The condition that satisfies the condition 2-1 based determination is represented by the following expression:

## Engine rotational speed ≤ Second threshold value.

More specifically, if the engine rotational speed becomes equal to or less than the second threshold value, the ECU 90 determines that the driving half-clutch control process for the clutch 44 should be stopped. On the other hand, if the engine rotational speed becomes greater than the second threshold value, the ECU 90 determines that the driving half-clutch control process for the clutch 44 should be continued. Note that in the present embodiment, the condition 2-1 based determination constitutes the second condition. Under the second condition, the ECU 90 determines that the driving half-clutch control process for the clutch 44 should be stopped if at least the condition for the condition 2-1 based determination is satisfied.

For the second condition, it is also possible to add other conditions than that for the condition 2-1 based determination. For example, the ECU 90 may add a condition based on the rotational speed of the middle shaft 46 to the second condition. In this case, the ECU 90 detects the rotational speed of the middle shaft 46 using the middle shaft rotational speed sensor S46. The ECU 90 stores in advance a third threshold value of the rotational speed of the middle shaft 46, for determining whether or not the driving half-clutch control process is to be stopped when the clutch 44 is in the half clutch state. Like the foregoing threshold values, this third threshold value is stored in a memory or the like, which is not shown in the drawings, within the ECU 90. Then, the ECU 90 compares the detected middle shaft rotational speed with the third threshold value. In the present embodiment, this determination process is referred to as "condition 2-2 based determination". The condition that satisfies the condition 2-2 based determination is represented by the following expression:

## Middle shaft rotational speed ≤ Third threshold value .

In this case, the second condition comprises the condition 2-1 based determination and the condition 2-2 based determination. If it is determined that the middle shaft rotational speed is equal to or less than the third threshold value and the condition 2-1 based determination is satisfied, the ECU 90 determines that the driving half-clutch control process for the clutch 44 should be stopped. In other cases, the ECU 90 determines that the driving half-clutch control process for the clutch 44 should be continued.

As described above, the ECU 90 determines that the driving half-clutch control process for the clutch 44 should be stopped when either one of the first condition or the second condition is satisfied. It is also possible that the ECU 90 determines that the driving half-clutch control process for the clutch 44 should be stopped when both the first condition and the second condition are satisfied. In this case, the ECU 90 determines that the driving half-clutch control process for the clutch 44 should be stopped, and subsequently, the process proceeds to step S140. If either one of the first condition or the second condition is not satisfied, the ECU 90 determines that the driving half-clutch control process for the clutch 44 should be continued, and subsequently, the process proceeds to step S 150.

The first threshold value in the first condition and the third threshold value in the second condition may be either the same value or different values. The first threshold value and the third threshold value may be set respectively for each of the gear positions of the transmission mechanism 43 or may be a constant. In the case that the first threshold value and the third threshold value are set respectively for each of the gear positions of the transmission mechanism 43, the first threshold values and the third threshold values corresponding to the respective gear positions are set in the ECU 90 using a function formula, a table, a map, or the like. In addition, it is also possible that the rotational speed of the engine 45 for each of the gear positions at the time when the motorcycle 1 is at a standstill, that is, the idle rotation speed, may be set for the first threshold value and the third threshold value. In this case, the idle rotation speed for each of the gear positions can be identified in advance by a test, simulation, or the like.

If the ECU 90 determines that the driving half-clutch control process for the clutch 44 should be stopped in step S 130 shown in Fig. 5, the ECU 90 executes an engine stall prevention control process at step S140. More specifically, the engine stall prevention control unit 96 of the ECU 90 immediately stops the control process of the clutch control unit 92 for engaging the clutch 44, to perform disengagement of the clutch 44. The ECU 90 executes a disengagement process for the clutch 44 by controlling actuation of the clutch actuator 60. Referring to Fig. 6, at time t2, the ECU 90 controls actuation of the clutch actuator 60 so as to stop the driving half-clutch control process for the clutch 44 and to cause the clutch 44 to disengage. Then, at time t3, at which the disengagement of the clutch 44 is completed, the ECU 90 starts the starting half-clutch control process. In the starting half-clutch control process, the time until the clutch 44 is engaged is longer than in the driving half-clutch control process. For this reason, engine stalling can be prevented by executing the starting half-clutch control process. Then, after executing the starting half-clutch control process, the ECU 90 controls the clutch actuator 60 so as to cause the clutch 44 to move toward an engaged position. Then, when the engagement of the clutch 44 is completed, and the control process of the automatic transmission apparatus 50 ends.

On the other hand, if the ECU 90 determines that the driving half-clutch control process for the clutch 44 should be continues in step S130, the ECU 90 subsequently determines whether or not the half clutch state of the clutch 44 has ended in step S150. This method for determining whether the half clutch state has ended is not particularly limited. For example, the ECU 90 calculates an elapsed time from the start of engagement of the clutch 44 after the changing of the gear position. The ECU 90 stores in advance a predetermined time for executing the driving half-clutch control process for the clutch 44. If the elapsed time is equal to or longer the predetermined time, the ECU 90 determines that the half clutch state of the clutch 44 should be ended, in other words, the driving half-clutch control process should be ended, and the clutch 44 should be controlled so as to move further toward an engaged position. On the other hand, if the elapsed time is less the predetermined time, the ECU 90 determines that the half clutch state of the clutch 44 should be continued, in other words, the driving half-clutch control process should be continued. If it is determined that the clutch 44 should be controlled so as to move further toward an engaged position, the ECU 90 subsequently executes the process of step S160. On the other hand, if it is determined that the driving half-clutch control process should be continued, the process returns to step S120.

At step S160 in Fig. 5, the ECU 90 controls the clutch 44 so as to move from the half clutch state further toward an engaged position. The ECU 90 causes the clutch 44 to move from the half clutch state further toward an engaged position by controlling the actuation of the clutch actuator 60. Referring to Fig. 7, at time t2, the ECU 90 ends the driving half-clutch control process for the clutch 44 and controls the clutch 44 to move further toward an engaged position. Then, when the engagement of the clutch 44 is completed, and the control process of the automatic transmission apparatus 50 ends.

The ECU 90 functions as the clutch control unit 92 when executing the process of step S120. The ECU 90 functions as the clutch stop determining unit 94 when executing the process of step S 130. The ECU 90 functions as the engine stall prevention control unit 96 when executing the process of step S140. Thus, the ECU 90 has the clutch control unit 92, the clutch stop determining unit 94, and the engine stall prevention control unit 96. In the present embodiment, the first detecting device comprises the middle shaft rotational speed sensor S46 and the clutch stop determining unit 94. The second detecting device comprises the engine rotational speed sensor S45 and the clutch stop determining unit 94.

According to the present embodiment, the ECU 90 controls the clutch actuator 60 using the clutch control unit 92, so as to cause the clutch 44 having been disengaged to engage the at the time of gear shifting during driving. Then, if it is determined that the first condition or the second condition is satisfied during the control process of the clutch control unit 92, the ECU 90 stops the control process of the clutch control unit 92 by the engine stall prevention control unit 96 and controls the clutch actuator 60 so as to cause the clutch 44 to disengage. The first condition is either one or both of the following conditions: that the moving average of the rotational speed of the middle shaft 46 is equal to or less than the first threshold value; and that the rotational speed of the middle shaft 46 has continued to be equal to or less than the first threshold value for a predetermined time or longer since the rotational speed of the middle shaft 46 was detected to be equal to or less than the first threshold value. The second condition is at least that the engine rotational speed is equal to or less than the second threshold value. Thus, setting the first condition in this way has the following advantages: even if the rotational speed of the middle shaft 46 temporarily becomes equal to or less than the first threshold value because of the gear lash, the control process of the clutch control unit 92 will not be stopped for that reason alone. As a result, it is possible to avoid the situation in which the control process is stopped even though the vehicle is in such a condition that engine stalling actually does not occur. Accordingly, impairment of the riding feel can be prevented. Moreover, by setting the second condition, the control process is stopped if the engine rotational speed becomes equal to or less than the second threshold value, so engine stalling can be prevented more reliably. If the moving average of the rotational speed of the middle shaft 46 becomes equal to or less than the first threshold value, or if the rotational speed of the middle shaft 46 has continued to be equal to or less than the first threshold value for a predetermined time or longer since the rotational speed of the middle shaft 46 was detected to be equal to or less than the first threshold value, the control process of the clutch control unit 92 is stopped. Accordingly, the just-mentioned control process can be stopped before the engine rotational speed decreases and becomes equal to or less than the second threshold value. Thus, by combining the first condition and the second condition with each other, engine stalling can be prevented and moreover the time required for stopping of the control process can be shortened.

In the present embodiment, it is also possible that the second condition may be that the engine rotational speed is equal to or less than the second threshold value and the rotational speed of the middle shaft is equal to or less than the third threshold value. This makes it possible to determine whether or not to stop the control process of the clutch control unit 92 from the engine rotational speed and the rotational speed of the middle shaft 46. Therefore, engine stalling can be prevented more reliably.

In the present embodiment, the third threshold value in the second condition and the first threshold value in the first condition may be equal to each other. This serves to reduce the number of the threshold values that need to be stored in the ECU 90.

According to the present embodiment, the first threshold value in the first condition may be set respectively for each of the gear positions of the transmission mechanism 43. Also, the first threshold value for each of the gear positions may be set to the rotational speed of the middle shaft 46 at the time when the engine 45 rotates at the idle rotation speed at each of the gear positions of the transmission mechanism 43. This makes it possible to set the first threshold value as appropriate according to each respective gear position. Moreover, by setting the first threshold value to be the idle rotation speed, engine stalling can be prevented more reliably.

< OTHER EMBODIMENTS >

In the foregoing embodiment, the clutch actuator 60 and the shift actuator 70 are provided separately. However, instead of providing the clutch actuator 60 and the shift actuator 70 separately, it is also possible to a single actuator for driving both the clutch 44 and the transmission mechanism 43.

In the foregoing embodiment, the gear shifting command is sent to the ECU 90 by the rider's manual operation of the shift-up switch or the shift-down switch of the shift switch. However, the ECU 90 may output a gear shifting command according to the driving condition of the motorcycle 1. Specifically, the ECU 90 outputs a gear shifting command by detecting, for example, the vehicle speed, the rotational speed of the engine 45, and/or the gear position of the transmission mechanism 43.

In the foregoing embodiment, the rotating shaft is the middle shaft 46 of the transmission mechanism 43. However, the rotating shaft is not limited to the middle shaft 46, and it is sufficient that the rotating shaft is a shaft to which the transient vibration is transmitted more until the dog clutch is engaged, when the gear position of the dog clutch type transmission mechanism 43 is changed. The rotating shaft may be a shaft other than those within the transmission mechanism 43. For example, the rotating shaft may be the main shaft 41, the drive shaft 42, and a shaft for driving the rear wheel 23 shown in Fig. 2.

REFERENCE SIGNS LIST

    1 -- Motorcycle (straddle-type vehicle)
    43-- Transmission mechanism
    44 -- Clutch
    45 -- Engine
    46 Middle shaft (rotating shaft)
    50 -- Automatic transmission apparatus
    60 -- Clutch actuator
    90 -- ECU (transmission control system)
    92 Clutch control unit
    94 -- Clutch stop determining unit
    96 -- Engine stall prevention control unit

**Claims**

1. A straddle-type vehicle comprising:

    an engine (45);
    a driving wheel (23) driven by mechanical power of the engine (45);
    a multi-geared type transmission mechanism (43) having a dog clutch and disposed between the engine (45) and the driving wheel (23);
    a clutch (44) provided between the engine (45) and the transmission mechanism (43);
    a shift actuator (70) configured to drive the transmission mechanism (43);
    a clutch actuator (60) configured to drive the clutch (44);
    a rotating shaft (46) provided between the clutch (44) and the driving wheel (23);
    a first detecting device (S46) configured to detect a rotational speed of the rotating shaft (46);
    a second detecting device (S45) configured to a rotational speed of the engine (45); and
    a control device (90) configured to control the clutch actuator (60) and the shift actuator (70) so as to cause disengagement of the clutch (44), changing of a gear position of the transmission mechanism (43), and engagement of the clutch (44) in gear shifting,
    the control device (90) comprising:

a clutch control unit (92) configured to control the clutch actuator (60) so as to cause the clutch (44) having been disengaged to engage at the time of gear shifting during driving;

**characterized in that** the control device (90) comprises:

a determining unit (94) configured to determine whether or not the following first condition or the following second condition is satisfied during the controlling of the clutch control unit (92) at the time of gear shifting during driving; and
an engine stall prevention control unit (96) configured to stop, at the time of gear shifting during driving, the controlling of the clutch control unit (92) and controlling the clutch actuator (60) so as to cause the clutch (44) to disengage if the determining unit (94) determines that the following first condition or the second condition is satisfied,
the first condition being either one or both of the following conditions: that a moving average of the rotational speed of the rotating shaft (46) is equal to or less than a first threshold value, and that the rotational speed of the rotating shaft (46) has continued to be equal to or less than the first threshold value for a predetermined time or longer since the rotational speed of the rotating shaft (46) was detected to be equal to or less than the first threshold value; and
the second condition being at least that the engine rotational speed is equal to or less than a second threshold value.

2. The straddle-type vehicle according to claim 1, wherein the second condition is that the engine rotational speed is equal to or less than the second threshold value and the rotational speed of the rotating shaft (46) is equal to or less than a third threshold value.

3. The straddle-type vehicle according to claim 2, wherein the third threshold value and the first threshold value are equal to each other.

4. The straddle-type vehicle according to claim 1, wherein:

the engine (45) includes:

a crankshaft (25);
a main shaft (41) coupled to the crankshaft (25) via the clutch (44);
a drive shaft (42) coupled to the main shaft (41) via the transmission mechanism (43); and
a middle shaft coupled to the drive shaft (42) via a gear, and wherein
the rotating shaft (46) is the middle shaft.

5. The straddle-type vehicle according to claim 4, wherein:

the engine (45) is controlled so that the rotational speed thereof at a standstill becomes a predetermined idle rotation speed;
the first threshold value is respectively set for each of the gear positions of the transmission mechanism (43); and
the first threshold value for each of the gear positions is set to a rotational speed of the middle shaft at the time when the engine (45) rotates at the idle rotation speed at each of the gear positions.

**Patentansprüche**

1. Ein Grätsch-Typ-Fahrzeug, das folgende Merkmale aufweist:

einen Motor (45);
ein Antriebsrad (23), das durch mechanische Leistung des Motors (45) angetrieben wird;
ein Übertragungsmechanismus vom Mehrfachgetriebetyp (43) mit einer Klauenkupplung, der zwischen dem Motor (45) und dem Antriebsrad (23) angeordnet ist;
eine Kupplung (44), die zwischen dem Motor (45) und dem Übertragungsmechanismus (43) vorgesehen ist;
ein Schaltbetätigungselement (70), das konfiguriert ist, um den Übertragungsmechanismus (43) anzutreiben;
ein Kupplungsbetätigungselement (60), das konfiguriert ist, um die Kupplung (44) anzutreiben;
eine Drehwelle (46), die zwischen der Kupplung (44) und dem Antriebsrad (23) vorgesehen ist;

EP 2 696 091 B1

eine erste Erfassungsvorrichtung (S46), die konfiguriert ist, um eine Drehgeschwindigkeit der Drehwelle (46) zu erfassen;

eine zweite Erfassungsvorrichtung (S45), die konfiguriert ist, um eine Drehgeschwindigkeit des Motors (45) zu erfassen; und

eine Steuervorrichtung (90), die konfiguriert ist, um das Kupplungsbetätigungselement (60) und das Schaltbetätigungselement (70) zu steuern, um eine Außereingriffnahme der Kupplung (44), eine Änderung der Getriebeposition des Übertragungsmechanismus (43) und eine Eingriffnahme der Kupplung (44) beim Schalten zu verursachen,

wobei die Steuervorrichtung (90) folgende Merkmale aufweist:

eine Kupplungssteuereinheit (92), die konfiguriert ist, um das Kupplungsbetätigungselement (60) zu steuern, um zu bewirken, dass die Kupplung (44), die außer Eingriff genommen wurde, zum Zeitpunkt des Schaltens während des Fahrens in Eingriff genommen wird;

**dadurch gekennzeichnet, dass** die Steuervorrichtung (90) folgende Merkmale aufweist:

eine Bestimmungseinheit (94), die konfiguriert ist, um zu bestimmen, ob die folgende erste Bedingung oder die folgende zweite Bedingung während des Steuerns der Kupplungssteuereinheit (92) zum Zeitpunkt des Schaltens während des Fahrens erfüllt ist oder nicht; und

eine Motorstillstandverhinderungssteuereinheit (96), die konfiguriert ist, um zum Zeitpunkt des Schaltens während des Fahrens das Steuern der Kupplungssteuereinheit (92) und das Steuern des Kupplungsbetätigungselements (60) anzuhalten, um zu bewirken, dass die Kupplung (44) außer Eingriff kommt, falls die Bestimmungseinheit (94) bestimmt, dass die folgende erste Bedingung oder die zweite Bedingung erfüllt ist,

wobei die erste Bedingung entweder eine oder beide der folgenden Bedingungen ist: dass ein gleitender Mittelwert der Drehgeschwindigkeit der Drehwelle (46) gleich oder geringer ist als ein erster Schwellenwert, und dass die Drehgeschwindigkeit der Drehwelle (46) für eine vorbestimmte Zeit oder länger gleich oder geringer bleibt als der erste Schwellenwert, da die Drehgeschwindigkeit der Drehwelle (46) als gleich oder geringer als der erste Schwellenwert erfasst wurde; und

die zweite Bedingung zumindest ist, dass die Motordrehgeschwindigkeit gleich oder geringer ist als ein zweiter Schwellenwert.

2. Das Grätsch-Typ-Fahrzeug gemäß Anspruch 1, bei dem die zweite Bedingung ist, dass die Motordrehgeschwindigkeit gleich oder geringer ist als der zweite Schwellenwert und die Drehgeschwindigkeit der Drehwelle (46) gleich oder geringer ist als ein dritter Schwellenwert.

3. Das Grätsch-Typ-Fahrzeug gemäß Anspruch 2, bei dem der dritte Schwellenwert und der erste Schwellenwert gleich sind.

4. Das Grätsch-Typ-Fahrzeug gemäß Anspruch 1, bei dem:

der Motor (45) folgende Merkmale umfasst:

eine Kurbelwelle (25);
eine Hauptwelle (41), die über die Kupplung (44) mit der Kurbelwelle (25) gekoppelt ist;
eine Antriebswelle (42), die über den Übertragungsmechanismus (43) mit der Hauptwelle (41) gekoppelt ist; und
eine Mittelwelle, die über ein Getriebe mit der Antriebswelle (42) gekoppelt ist, und wobei
die Drehwelle (46) die Mittelwelle ist.

5. Das Grätsch-Typ-Fahrzeug gemäß Anspruch 4, bei dem:

der Motor (45) gesteuert wird, sodass die Drehgeschwindigkeit desselben bei einem Stillstand eine vorbestimmte Leerlaufdrehgeschwindigkeit wird;

der erste Schwellenwert jeweils für jede der Getriebepositionen des Übertragungsmechanismus (43) eingestellt ist; und

der erste Schwellenwert für jede der Getriebepositionen auf eine Drehgeschwindigkeit der Mittelwelle eingestellt ist zu dem Zeitpunkt, wenn der Motor (45) sich an jeder der Getriebepositionen mit der Leerlaufgeschwindigkeit

14

dreht.

**Revendications**

1.  Véhicule de type à selle, comprenant:

    un moteur (45);
    une roue d'entraînement (23) entraînée par l'énergie mécanique du moteur (45);
    un mécanisme de transmission de type à engrenages multiples (43) présentant un embrayage à griffes et disposé entre le moteur (45) et la roue d'entraînement (23);
    un embrayage (44) prévu entre le moteur (45) et le mécanisme de transmission (43);
    un actionneur de changement de vitesse (70) configuré pour entraîner le mécanisme de transmission (43);
    un actionneur d'embrayage (60) configuré pour entraîner l'embrayage (44);
    un arbre rotatif (46) prévu entre l'embrayage (44) et la roue d'entraînement (23);
    un premier dispositif de détection (S46) configuré pour détecter une vitesse de rotation de l'arbre rotatif (46);
    un deuxième dispositif de détection (S45) configuré pour détecter une vitesse de rotation du moteur (45); et
    un dispositif de commande (90) configuré pour commander l'actionneur d'embrayage (60) et l'actionneur de changement de vitesse (70) de manière à provoquer le dégagement de l'embrayage (44), le changement d'une position d'engrenage du mécanisme de transmission (43), et l'engagement de l'embrayage (44) pour un changement de vitesse,
    le dispositif de commande (90) comprenant:

    une unité de commande d'embrayage (92) configurée pour commander l'actionneur d'embrayage (60) de manière à amener l'embrayage (44) ayant été dégagé à s'engager au moment du changement de vitesse pendant la conduite;

    **caractérisé par le fait que** le dispositif de commande (90) comprend:

    une unité de détermination (94) configurée pour déterminer si la première condition suivante ou la deuxième condition suivante est ou non satisfaite pendant la commande de l'unité de commande d'embrayage (92) au moment du changement de vitesse pendant la conduite; et
    une unité de commande anti-calage de moteur (96) configurée de manière à arrêter, au moment du changement de vitesse pendant la conduite, la commande de l'unité de commande d'embrayage (92) et à commander l'actionneur d'embrayage (60) de manière à amener l'embrayage (44) à se dégager si l'unité de détermination (94) détermine que la première condition suivante ou la deuxième condition suivante est satisfaite,
    la première condition étant l'une ou l'autre des ou les deux conditions suivantes : que la moyenne de variation de la vitesse de rotation de l'arbre de rotation (46) est égale ou inférieure à une première valeur de seuil, et que la vitesse de rotation de l'arbre de rotation (46) a continué à être égale ou inférieure à la première valeur de seuil pendant un temps prédéterminé ou plus depuis qu'il a été détecté que la vitesse de rotation de l'arbre rotatif (46) est égale ou inférieure à la première valeur de seuil; et
    la deuxième condition étant au moins que la vitesse de rotation du moteur est égale ou inférieure à une deuxième valeur de seuil.

2.  Véhicule de type à selle selon la revendication 1, dans lequel la deuxième condition est que la vitesse de rotation du moteur est égale ou inférieure à la deuxième valeur de seuil et que la vitesse de rotation de l'arbre de rotation (46) est égale ou inférieure à une troisième valeur de seuil.

3.  Véhicule de type à selle selon la revendication 2, dans lequel la troisième valeur de seuil et la première valeur de seuil sont égales l'une à l'autre.

4.  Véhicule de type à selle selon la revendication 1, dans lequel:

    le moteur (45) comprend:

    un vilebrequin (25);
    un arbre principal (41) couplé au vilebrequin (25) par l'intermédiaire de l'embrayage (44);

un arbre d'entraînement (42) couplé à l'arbre principal (41) par l'intermédiaire du mécanisme de transmission (43); et

un arbre central couplé à l'arbre d'entraînement (42) par l'intermédiaire d'un engrenage, et dans lequel l'arbre rotatif (46) est l'arbre central.

5. Véhicule de type à selle selon la revendication 4, dans lequel:

le moteur (45) est commandé de sorte que la vitesse de rotation de celui-ci à l'arrêt devient une vitesse de ralenti prédéterminée;

la première valeur de seuil est respectivement réglée pour chacune des positions d'engrenage du mécanisme de transmission (43); et

la première valeur de seuil pour chacune des positions d'engrenage est réglée à une vitesse de rotation de l'arbre central au moment où le moteur (45) tourne à la vitesse de ralenti dans chacune des positions d'engrenage.

FIG.1

FIG.2

FIG.3

FIG.4

ACCELERATOR 63

S63

61

S65 65

62

ENGINE 45

S45

44

CLUTCH ACTUATOR 60

CLUTCH 43

S43

46

S46

REAR WHEEL 23

S23

SHIFT ACTUATOR 70

90

50

CLUTCH CONTROL UNIT 92

CLUTCH STOP DETERMINING UNIT 94

ENGINE STALL PREVENTION CONTROL UNIT 96

FIG.5

```
                    ┌─────────────┐
                    │    START    │
                    └─────────────┘
                           │
                           ▼
          ┌──────────────────────────────────┐
S90       │     GEAR SHIFTING COMMAND        │
          └──────────────────────────────────┘
                           │
                           ▼
          ┌──────────────────────────────────┐
S100      │     START DISENGAGING CLUTCH     │
          └──────────────────────────────────┘
                           │
                           ▼
          ┌──────────────────────────────────┐
S110      │      CHANGE GEAR POSITION        │
          └──────────────────────────────────┘
                           │
                           ▼
          ┌──────────────────────────────────┐
          │   DRIVING HALF-CLUTCH CONTROL    │
          └──────────────────────────────────┘
S120                       │
                           ▼
                   STOP DRIVING          NO        HALF-CLUTCH      NO   S150
                   HALF-CLUTCH  ───────────────►   STATE FINISHED?
                   CONTROL?
S130                       │                              │
                          YES                            YES
                           ▼                              ▼
          ┌──────────────────────┐      ┌──────────────────────┐
S140      │    ENGINE STALL      │      │  CLUTCH ENGAGEMENT   │
          │ PREVENTING CONTROL   │      │      CONTROL         │
          └──────────────────────┘      └──────────────────────┘
                           │                          S160
                           ▼
                    ┌─────────────┐
                    │     END     │
                    └─────────────┘
```

FIG.6

FIG.7

DISENGAGED

CLUTCH POSITION

ENGAGED

TIME

A2

ROTATION POSITION OF
SHIFT DRUM     A1

TIME

ROTATION SPEED OF
MIDDLE SHAFT

FIRST THRESHOLD VALUE

TIME

t0    t1                t2

**EP 2 696 091 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006170229 A

- DE 4229024 A1